**Europäisches Patentamt**

**European Patent Office**

**Office européen des brevets**

(19)

(11) Veröffentlichungsnummer: **0 158 130**
**B1**

# (12) EUROPÄISCHE PATENTSCHRIFT

(45) Veröffentlichungstag der Patentschrift:
02.08.89

(21) Anmeldenummer: 85102709.4

(22) Anmeldetag: 09.03.85

(51) Int. Cl.⁴: **B 01 J 8/02** //
**C01C1/04**

(54) **Vorrichtung zur Erzielung einer gleichmässigen Gasverteilung in radial durchströmter Katalysatorschicht.**

(30) Priorität: 10.04.84 DE 3413421

(43) Veröffentlichungstag der Anmeldung:
16.10.85 Patentblatt 85/42

(45) Bekanntmachung des Hinweises auf die Patenterteilung:
02.08.89 Patentblatt 89/31

(84) Benannte Vertragsstaaten:
AT BE CH DE FR GB IT LI NL SE

(56) Entgegenhaltungen:
AT-B-298 517
AT-B-321 952
DE-A-2 019 706
DE-B-2 126 211
FR-A-2 343 699

(73) Patentinhaber: Uhde GmbH, Friedrich- Uhde-Strasse 15, D-4600 Dortmund 1 (DE)

(72) Erfinder: Förster, Friedrich, Dipl.- Ing., Rankenweg 5, D-4600 Dortmund 30 (DE)

## Beschreibung

Die Erfindung betrifft eine Vorrichtung zur Erzielung einer gleichmäßigen Gasverteilung in radial durchströmter Katalysatorschicht in einem Reaktor für katalytische Reaktionen, bestehend aus dem die Katalysatorschicht aufnehmenden, ringförmigen Katalysatorkorb mit gasdurchlässigen, zylindrischen Wänden und gasdichtem Boden und gasdichtem Deckel, wobei der Katalysatorkorb in einem ringförmigen Behälter mit gasdichtem Boden, mit der Außenwand und der kürzeren Innenwand derart angeordnet ist, daß außen ein Ringraum für zuströmendes Frischgas und innen ein Ringraum für über die kürzere Innenwand abströmendes Reaktionsgas entsteht. Radial durchströmte Katalysatorschichten werden besonders in Reaktoren für Großanlagen wie z. B. für die Ammoniaksynthese eingeplant, weil sich dadurch ein geringer Strömungsdruckverlust ergibt, was sich vorteilhaft auf den aufzuwendenden Energiebedarf für die Kreislaufführung des Prozeßgases auswirkt.

Nach DE-OS-2 710 247 sind radial durchströmte Katalysatorschichten in Ammoniaksynthesegasreaktoren bekannt mit ringförmigem Katalysatorkorb in ringförmigem Behälter mit äußerem und innerem Ringraum und einer kürzeren Innenwand.

Bei derartig durchströmten Katalysatorschichten ist es erforderlich, daß über die ganze Höhe der Katalysatorschicht eine gleichmäßige Gasdurchströmung stattfindet, da andernfalls innerhalb der Katalysatorschicht unterschiedliche Raumgeschwindigkeiten auftreten und demzufolge die Reaktion unterschiedlich abläuft.

Es ist vorgeschlagen worden, die Gaseintrittswand für die Katalysatorschicht so auszugestalten, daß durch zwei parallele Flächen mit einer Vielzahl unterschiedlicher Öffnungen ein Druckabfall eintritt, der erheblich höher ist als der Druckabfall durch das Katalysatorbett (deutsche Patentschrift 1 542 499). Hier wird eine Vielzahl von als Blenden wirkende Öffnungen als Gasverteilungsvorrichtung benutzt.

Es ist weiterhin vorgeschlagen worden, bei Katalysatorschichten, die radial von innen nach außen durchströmt werden, zur gleichmäßigen Gasverteilung über die Höhe der Katalysatorschicht die Gasdurchtrittsquerschnitte im inneren Gasverteilerrohr in abgestufter Weise als Funktion der Katalysatorschichthöhe anzuordnen. Die Öffnungen im äußeren konzentrischen Ringblech sind gleichmäßig verteilt über die Gesamtfläche, wobei die Gesamtfläche mindestens gleich groß ist wie die Fläche der Öffnungen pro Flächeneinheit im ersten Viertel des inneren Ringbleches, siehe deutsche Patentschrift 2 019 706. In diesem Fall soll die gleichmäßige Gasverteilung über die Schichthöhe nicht durch erhöhten Druckverlust in Blenden erzielt werden, sondern durch in besonderer Weise angeordnete Öffnungsquerschnitte im inneren Gasverteilerrohr. Dabei sind die Abmessungen der Katalysatorschicht zu berücksichtigen.

Nach DE-B-2 126 211 ist ein Hochdruckreaktor für katalytische Gasreaktionen mit nachfolgenden Zwischenwärmetauschern bekannt, bei dem die Strömungsrichtung des Synthesegases in den Zu- und Abströmräumen außerhalb des Katalysatorraumes achsial gleichgerichtet ist. Die Ringbleche als gasdurchlässige Wände des Katalysatorraumes müssen eine spezielle flächenbezogene Lochung aufweisen, in etwa gemäß der Lehre aus der DE-A-2 019 706, um eine gleichmäßige Gasverteilung in den radial durchströmten Katalysatorlagen zu erzielen. Die flächenbezogene Lochung der Ringbleche hat einen überproportionalen Druckverlust und damit auch Energieverlust zur Folge.

Der Erfindung liegt die Aufgabe zugrunde, die Nachteile bisher bekannter Vorrichtungen für radial durchströmte Katalysatorschichten zu beseitigen.

Überraschend wurde gefunden, daß die Aufgabe bei einer Vorrichtung entsprechend dem Erfindungsgegenstand dadurch gelöst wird, daß die Querschnittsfläche des Ringraumes für das axial aus dem Ringraum abströmende Reaktionsgas gleich oder größer ist als die Querschnittsfläche des Ringraumes für das axial in den Ringraum zuströmende Frischgas.

Nach einer bevorzugten Ausführungsform beträgt das Querschnittsflächenverhältnis der beiden Ringräume 1,0 bis 1,2.

Die mit der Erfindung erzielten Vorteile bestehen insbesondere darin, daß mittels der Erfindungsgemäßen Ausgestaltung der Zuström- und Abströmkanäle auf spezielle konstruktive Maßnahmen, wie z. B. spezielle flächenbezogene Lochung der gasdurchlässigen Wände, verzichtet werden kann. Es stellt sich über die gesamte Katalysatorschichthöhe eine gleichmäßige radiale Gaszuströmung und damit auch Abströmung ein. Die Gasverteilung innerhalb der Katalysatorschicht ist gleichmäßig, was somit für den Katalysator eine gleichmäßige Raumgeschwindigkeit bedeutet und zu gleichmäßiger Reaktion am Katalysator führt.

Zwei Ausführungsbeispiele sind in den Zeichnungen dargestellt und zeigen:

Fig. 1    die Vorrichtung mit Katalysatorkorb und U-förmiger Gasführung

Fig. 2    die Vorrichtung mit Katalysatorkorb und umgekehrt U-förmiger Gasführung.

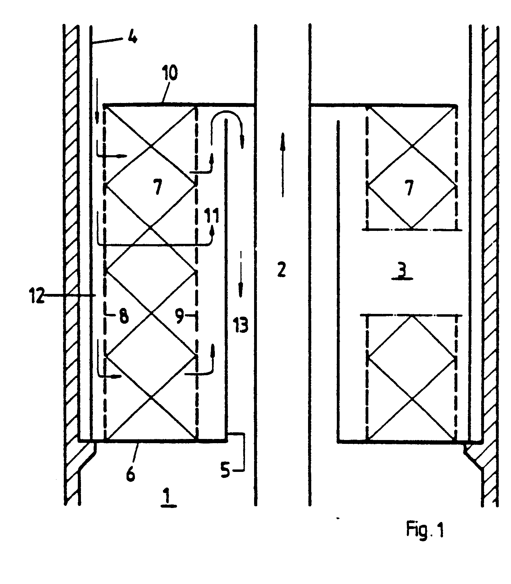

In einem Abschnitt eines katalytischen Reaktors 1 der Fig. 1 mit zentralem Gasleitrohr 2 ist der ringförmige Behälter 3 angeordnet mit der gasdichten Außenwand 4, der gasdichten Innenwand 5, die etwas kürzer ist als die Außenwand 4 und dem gasdichten Boden 6. In diesem ringförmigen Behälter 3 ruht der Katalysatorkorb 7 mit gasdurchlässigen Wänden 8, 9 und gasdichtem Deckel 10, der innen bis an das zentrale Gasleitrohr 2 reicht. Der Katalysatorkorb 7 ist derart im ringförmigen Behälter 3 placiert, daß innen ein freier Ringraum 11 für das abströmende Reaktionsgas verbleibt, dessen Querschnittsfläche mindestens gleich groß, vorzugsweise jedoch etwas größer ist, als die Querschnittsfläche des äußeren freien Ringraumes 12 für das zuströmende Frischgas. Durch diese Gestaltung wird sichergestellt, daß in der Katalysatorschicht 7 über ihre gesamte Höhe eine gleichmäßige Gasdurchströmung vorliegt, was damit zwangsläufig zu gleichmäßiger katalytischen Reaktion und dem gewünschten Umsatz führt.

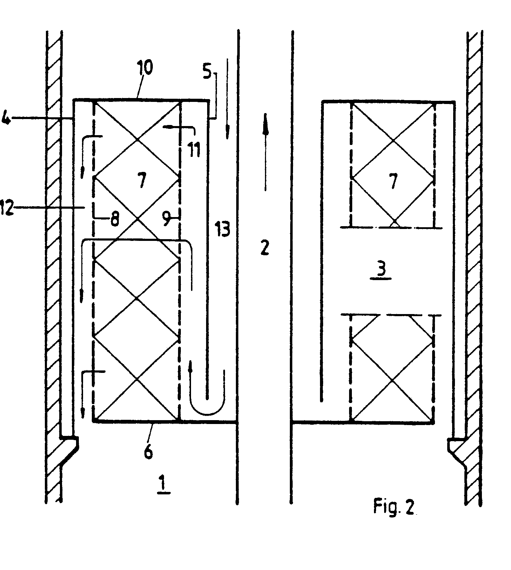

Wird es aus konstruktiven Gründen erforderlich, den ringförmigen Behälter 3 zur Aufnahme des Katalysatorkorbes 7 umgekehrt im Reaktor 1 anzuordnen, gemäß Fig. 2, so ist zu gewährleisten daß die Querschnittsflächen der beiden Ringräume 11 und 12 im erfindungsgemäßen Verhältnis zueinander stehen, da anderenfalls eine gleichmäßige Verteilung des Frischgases über die Katalysatorfüllung nicht erzielt wird.

Die efindungsgemäße Vorrichtung ist nicht nur beschränkt auf katalytische Reaktionen für Ammoniaksynthesen, sondern eignet sich vorteilhaft für alle radial durchströmbaren Katalysatorfüllungen in Reaktoren mit Einfach- oder mit Mehrfach-Katalysatorschichten.

**Beispiel 1**

Ein Niederdruck-Ammoniaksynthesereaktor für eine Produktion von 1000 t $NH_3$/Tag bei einem Betriebsdruck von 106 bar enthält im 1. Katalysatorbett mit einem zentral in diesem Bett angeordneten Wärmetauscher eine gasdurchlässige, zylindrische Außen- und Innenwand, zwischen denen der Katalysator angeordnet ist, mit folgenden Abmessungen:

- Außendurchmesser der äußeren
    gasdurchlässigen Wand            3350 mm

- Innendurchmesser der inneren
    gasdurchlässigen Wand            2000 mm

Der Abstand zwischen dem Außendurchmesser der äußeren gasdurchlässigen Wand und dem Innendurchmesser der sie umschließenden äußeren nicht gasdurchlässigen Wand beträgt 60 mm. Damit beträgt der Querschnittsfläche dieses äußeren Ringraumes, dem für eine radiale Gasströmung durch den Katalysator von außen nach innen das Synthesegas axial von oben her zugeführt wird, $F_1 = 0,643$ m² und die axiale Geschwindigkeit des Synthesegases am Eintritt in den äußeren Ringraum 4,83 m/s.

Erfindungsgemäß muß die Querschnittsfläche des inneren Ringraumes für das axial nach oben abströmende Gas mindestens gleich oder größer sein als die entsprechende Ringquerschnittsfläche für das axial zuströmende Gas, vorzugsweise das 1,0 bis 1,20-fache. Damit wird der Abstand zwischen dem Innendurchmesser der inneren gasdurchlässigen Wand und dem Außendurchmesser der inneren nicht gasdurchlässigen Wand zwischen 108 und 120 mm ausgeführt, beispielsweise in 113 mm.

**Beispiel 2**

Das letzte Katalysatorbett desselben Reaktors wie im Beispiel 1 enthält keinen zentral angeordneten Wärmetauscher. Die entsprechenden Maße für die beiden gasdurchlässigen zylindrischen Wände sind in diesem Fall:

- Außendurchmesser der äußeren
    gasdurchlässigen Wand            3350 mm

- Innendurchmesser der inneren
    gasdurchlässigen Wand            1200 mm

Die äußere Ringquerschnittsfläche für das axial zuströmende Gas ist gleich der Ringquerschnittsfläche beim 1. Katalysatorbett ausgebildet, mit 60 mm Abstand zwischen äußerer nicht gasdurchlässiger und gasdurchlässiger Wand.

Der Abstand zwischen dem Innendurchmesser der inneren gasdurchlässigen Wand und dem Außendurchmesser der inneren nicht gasdurchlässigen Wand für das 3. Bett wird dann erfindungsgemäß zwischen 206 und 233 mm ausgeführt, beispielsweise in 211 mm.

**Patentansprüche**

Vorrichtung zur Erzielung einer gleichmäßigen Gasverteilung in radial durchströmter Katalysatorschicht in einem Reaktor für katalytische Reaktionen, bestehend aus dem die Katalysatorschicht aufnehmenden, ringförmigen Katalysatorkorb (7) mit gasdurchlässigen, zylindrischen Wänden (8, 9)) gasdichtem Boden (6) und gasdichtem Deckel (10), wobei der Katalysatorkorb (7) in einem ringförmigen Behälter mit gasdichtem Boden (6), mit der Außenwand (4) und der kürzeren Innenwand (5) derart angeordnet ist, daß außen ein Ringraum (12) für zuströmendes Frischgas und innen ein Ringraum (11) für über die kürzere Innenwand (5) abströmendes Reaktionsgas entsteht, dadurch gekennzeichnet, daß der Querschnitt des Ringraumes (11) für das axial aus dem Ringraum abströmende Reaktionsgas gleich oder größer ist als der Querschnitt des Ringraumes (12) für das axial in den Ringraum zuströmende Frischgas.

2. Vorrichtung nach Anspruch 1, dadurch gekennzeichnet, daß das Querschnittsverhältnis der beiden Ringräume 1,0 bis 1,2 beträgt.

**Claims**

1. Device for a uniform distribution of gas flowing radially through the catalyst bed of a reactor for catalytic reactions, said device consisting of annular catalyst basket (7) with gas- permeable cylindrical walls (8, 9), gas-tight bottom (6) and gas-tight cover (10), basket (7) being mounted in an annular vessel with gas-tight bottom (6), external wall (4) and shorter internal wall (5), so as to obtain external annular space (12) for the influent fresh gas and internal annular space (11) for the effluent reaction gas which passes via the shorter internal wall (5),

characterized in that the cross-sectional area of annular space (11) used as axial outlet for the reaction gas equals or exceeds that of annular space (12) used as axial inlet for the fresh gas.

2. Device according to claim 1,

characterized in that the ratio of the croßsectional areas of said annular spaces is 1 to 1.2.

## Revendications

1. Dispositif se prêtant à une distribution uniforme du gaz traversant radialement le lit catalytique d'un réacteur utilisé pour des réactions catalytiques, étant entendu que ledit dispositif comprend un panier de catalyseur annulaire (7) composé des parois cylindriques perméables au gaz (8, 9), d'un fond étanche au gaz (6) et d'un couvercle étanche au gaz (7), que le panier est installé dans une cuve annulaire composée d'un fond étanche au gaz (6), d'une paroi extérieure (4) et d'une paroi intérieure (5), cette dernière étant d'une hauteur inférieure à celle de la paroi (4), et que lesdits composants sont disposés de telle sorte que l'on obtient une chambre annulaire extérieure (12) requise pour l'admission du gaz vif et une chambre annulaire (11) nécessaire à l'évacuation du gaz de réaction au-dessus de la paroi (5),

caractérisé en ce que la section transversale de la chambre (11) utilisée comme sortie axiale pour le gaz de réaction est aussi grande ou plus grande que celle de la chambre (12) utilisée comme entrée axiale pour le gaz vif.

2. Dispositif selon la revendication 1,

caractérisé en ce que le rapport de la section transversale des deux chambres annulaires est de 1 à 1.2.

Fig. 1

Fig. 2